# EUROPEAN PATENT APPLICATION

(11) **EP 3 653 913 A1**
(43) Date of publication of application: **20.05.2020**
(21) Application number: 18831037.9
(22) Date of filing: 11.07.2018
(51) Int. Cl.: F16J 15/34, F16C 17/04

(54) **SLIDING MEMBER**

(30) Priority: 13.07.2017 JP 2017137470
(71) Applicant: Eagle Industry Co., Ltd., Minato-ku Tokyo 105-8587 (JP)
(72) Inventor: MASUMI Yuki, Tokyo 105-8587 (JP); SUZUKI Hiroshi, Tokyo 105-8587 (JP); CHIBA Keiichi, Tokyo 105-8587 (JP); HOSOE Takeshi, Tokyo 105-8587 (JP)
(74) Representative: TBK
(86) International application number: PCT/JP2018/026107
(87) International publication number: WO 2019/013233

(57) **Abstract**

[Technical Problem] An object is to provide sliding components with which a temperature can be lowered by reducing a friction loss of a sliding portion and improving a cooling performance even when the sliding components are used at high speed.

[Solution to Problem] A pair of sliding components having sliding faces S that slide with respect to each other includes fluid introduction portions 22 having opening portions 22a at a predetermined circumferential interval Y on a peripheral surface on the high pressure fluid side of the sliding face S, the fluid introduction portions extending in the radial direction, and Rayleigh step mechanisms including extremely shallow grooves 11 that communicate with the fluid introduction portions 22 and extend in the circumferential direction, wherein circumferential width X of the opening portions 22a of the fluid introduction portions 22 is larger than radial width Z of the fluid introduction portions 22.

## Description

### TECHNICAL FIELD

The present invention relates to a sliding component suitable, for example, as a mechanical seal, a bearing, and other sliding units. In particular, the present invention relates to a sliding component such as a seal ring or a bearing that requires reduction of friction by interposing a fluid between sliding faces, and prevention of leakage of the fluid from the sliding faces.

### BACKGROUND ART

In a mechanical seal serving as an example of a sliding component, in order to maintain a sealing property for a long time, contradictory conditions of "sealing" and "lubricating" have to be met. In particular, in recent years, for environmental measures, etc., a demand to lower friction grows further in order to reduce a mechanical loss while preventing leakage of a sealed fluid. A method of lowering friction can be achieved by generating dynamic pressure between sliding faces by rotation, and letting slide in a state where a liquid film is interposed, by making a so-called fluid lubricating state.

For example, there is a mechanical seal in which plural fluid introduction portions whose one ends are open on the radially outside and the other ends exist in a seal surface of a rotating seal ring and extend toward the radially inside are formed at an equal interval in the circumferential direction of the seal surface, dynamic pressure generation grooves communicating with these fluid introduction portions and extending to one side in the circumferential direction are formed, by rotating the rotating seal ring, a fluid on the high pressure fluid side (sealed fluid side) flows into the dynamic pressure generation grooves from the fluid introduction portions, and dynamic pressure is generated between the seal surface of the rotating seal ring and a seal surface of a stationary seal ring, so that a fluid lubricating performance is improved (for example, Patent Document 1).

There is a known pair of sliding components including extremely shallow grooves that form Rayleigh step mechanisms on a sliding face on one side, fluid introduction deep grooves for communicating with the high pressure fluid side and introducing a high pressure fluid to the upstream side of the extremely shallow grooves, an annular pressure reducing deep groove providing communication between the fluid introduction deep grooves on the low pressure fluid side of the fluid introduction deep grooves, and an annular pumping groove having an operation to push the fluid back to the high pressure fluid side between the annular pressure reducing deep groove and the sliding face on the low pressure fluid side, with which a fluid lubricating performance is improved and a sealing property is also improved (for example, Patent Document 2).

### CITATION LIST

### PATENT DOCUMENTS

Patent Document 1: JP 5-60247 A (Page 2, FIG. 5)
Patent Document 2: JP 6076985 B (Page 8, 9, FIG. 6)

### SUMMARY OF THE INVENTION

### Technical Problem

In recent years, a fluid machine is more increasingly speeded up, and accordingly, circumferential velocity of a sliding face of a mechanical seal is also increased. For example, when circumferential velocity V in a sliding radius of the sliding face of the mechanical seal exceeds 10 m/s, a temperature of the mechanical seal is increased. In particular, when the circumferential velocity exceeds 30 m/s, there is a tendency that the temperature of the mechanical seal is remarkably increased. However, only by applying the methods of lowering friction of the conventional techniques 1 and 2 to a mechanical seal to be used for high-speed rotation, the temperature of the mechanical seal portion cannot be sufficiently lowered, and it is difficult to ensure long-term reliability of the mechanical seal. The sliding radius is an average of an outside radius and an inside radius of the sliding face.

The present invention is achieved focusing on such a problem, and an object of the present invention is to provide sliding components with which a temperature can be lowered by reducing a friction loss of a sliding portion and improving a cooling performance even when the sliding components are used for high-speed rotation.

### Solution to Problem

In order to attain the above object, sliding components according to a first aspect of the present invention are a pair of sliding components having sliding faces that slide with respect to each other, characterized by including fluid introduction portions having opening portions at a predetermined circumferential interval on a peripheral surface on the high pressure fluid side of the sliding face, the fluid introduction portions extending in the radial direction, and extremely shallow grooves forming Rayleigh step mechanisms communicating with the fluid introduction portions and extending in the circumferential direction, the sliding components being characterized in that circumferential width of the opening portions of the fluid introduction portions is larger than radial width of the fluid introduction portions.

According to the first aspect, by forming the circumferential width of the opening portions of the fluid introduction portions larger than the radial width of the fluid introduction portions, an area of the sliding face S is reduced, so that it is possible to reduce a sliding loss. A bottleneck of flow passages passing through the inside of the fluid introduction portions from the opening portions and reaching the sliding face is removed and flow resistance of the sealed fluid is reduced. Thus, it is possible to efficiently cool the sliding face.

According to a second aspect of the present invention, the sliding components of the present invention are characterized in that a ratio between the circumferential width of the opening portions of the fluid introduction portions and the circumferential interval is from 0.2 to 0.9.

According to the second aspect, it is possible to increase an opening area of the fluid introduction portions on the sliding face and to increase an area where the sliding face is brought into direct contact with the fluid in the fluid introduction portions. Thus, it is possible to make efficient cooling.

According to a third aspect of the present invention, the sliding components of the present invention are characterized in that circumferential velocity in a sliding radius of the sliding face is not less than 10 m/s.

According to the third aspect, it is possible to reliably cool the sliding components with not less than 10 m/s at which an influence of a temperature increase is increased.

According to a fourth aspect of the present invention, the sliding components of the present invention are characterized by including a communication groove providing communication between the fluid introduction portions on the low pressure fluid side of the fluid introduction portions.

According to the fourth aspect, by releasing pressure of the high pressure fluid flowing from the extremely shallow grooves to the low pressure fluid side by the communication groove, it is possible to reduce leakage from the extremely shallow grooves toward the sliding face on the low pressure fluid side.

According to a fifth aspect of the present invention, the sliding components of the present invention are characterized by including a pumping portion on the sliding face on the low pressure fluid side of the communication groove.

According to the fifth aspect, the fluid is pushed back to the high pressure fluid side from the low pressure fluid side by the pumping portion. Thus, it is possible to reduce leakage.

### BRIEF DESCRIPTION OF THE DRAWINGS

FIG. 1 is a vertically sectional view showing an example of a mechanical seal according to a first embodiment.
FIG. 2 is a W-W arrow view of FIG. 1, which is an example of a sliding face of a sliding component according to the first embodiment of the present invention.
FIG. 3A is a view showing a section A-A in FIG. 2, FIG. 3B is a view showing a section B-B in FIG. 2, FIG. 3C is a view showing a section C-C in FIG. 2, and FIG. 3D is a view showing a section D-D in FIG. 2.
FIG. 4 is a W-W arrow view of FIG. 1, which is an example of a sliding face of a sliding component according to a second embodiment of the present invention.

### DESCRIPTION OF EMBODIMENTS

Modes for carrying out the present invention will be described as examples based on embodiments. However, the dimensions, the materials, the shapes, the relative arrangements, etc. of constituent components described in the embodiments are not intended to limit the scope of the present invention only to them unless otherwise described explicitly.

### First Embodiment

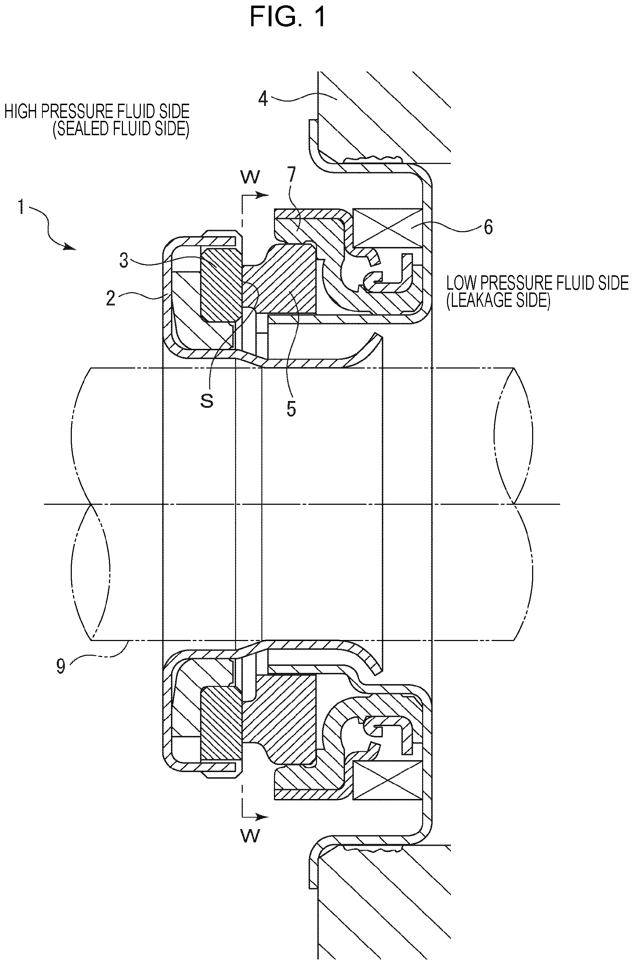

With reference to FIGS. 1 to 3, sliding components according to a first embodiment of the present invention will be described. In the following embodiment, as an example, a mechanical seal that is an example of the sliding components will be described. However, the present invention is not limited to this but for example can also be utilized as a sliding component of a bearing that slides with a rotating shaft while sealing lubricating oil on the axially one side of a cylindrical sliding face. The outer peripheral side of the sliding component forming the mechanical seal will be described as the high pressure fluid side (sealed fluid side), and the inner peripheral side as the low pressure fluid side (leakage side).

FIG. 1 is a vertically sectional view showing an example of a mechanical seal 1, which is an inside mechanical seal in the form of sealing a sealed fluid on the high pressure fluid side to leak from the outer periphery of sliding faces toward the inner periphery. The mechanical seal is provided with a ring-shaped rotating side seal ring 3 serving as one sliding component provided across a sleeve 2 on the side of a rotating shaft 9 in a state where the rotating side seal ring is rotatable integrally with this rotating shaft 9, and a ring-shaped stationary side seal ring 5 serving as the other sliding component provided in a housing 4 in a non-rotating state and an axially movable state. With a coiled wave spring 6 and a bellows 7 axially biasing the stationary side seal ring 5, the seal rings slide in close contact with each other at sliding faces S. That is, this mechanical seal prevents an outflow of the sealed fluid from the outer peripheral side of the rotating shaft 9 to the inner peripheral side at the sliding faces S of the rotating side seal ring 3 and the stationary side seal ring 5. FIG. 1 shows a case where width of the sliding face of the rotating side seal ring 3 is greater than width of the sliding face of the stationary side seal ring 5. However, the present invention is not limited to this but is also applicable to the opposite case as a matter of course.

The material of the rotating side seal ring 3 and the stationary side seal ring 5 is selected from silicon carbide (SiC) excellent in wear resistance, carbon excellent in self-lubricity, etc. For example, both the seal rings can be made of SiC or the rotating side seal ring 3 of SiC and the stationary side seal ring 5 of carbon can also be combined.

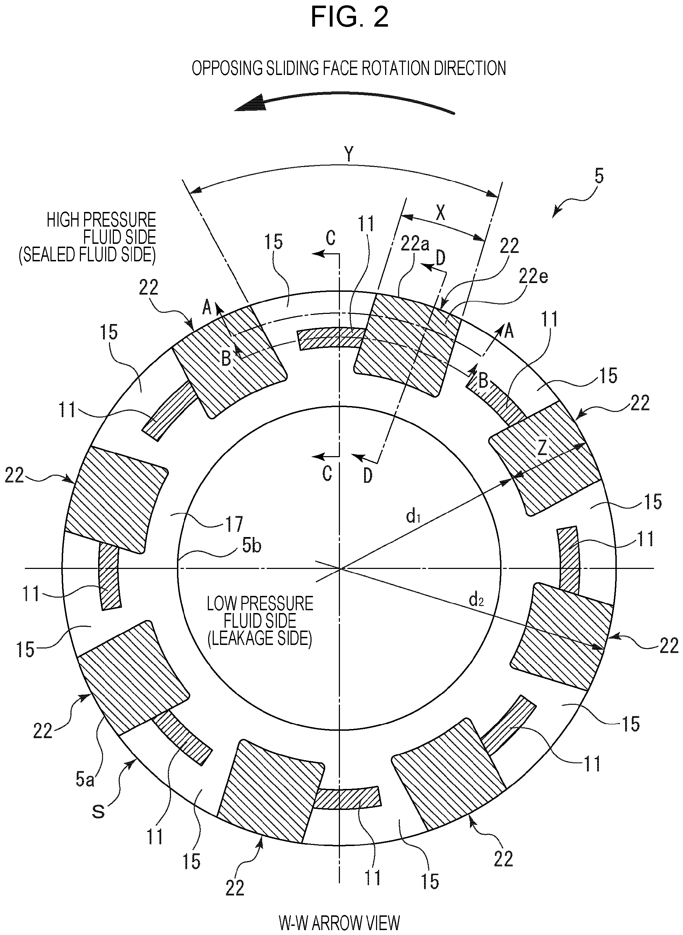

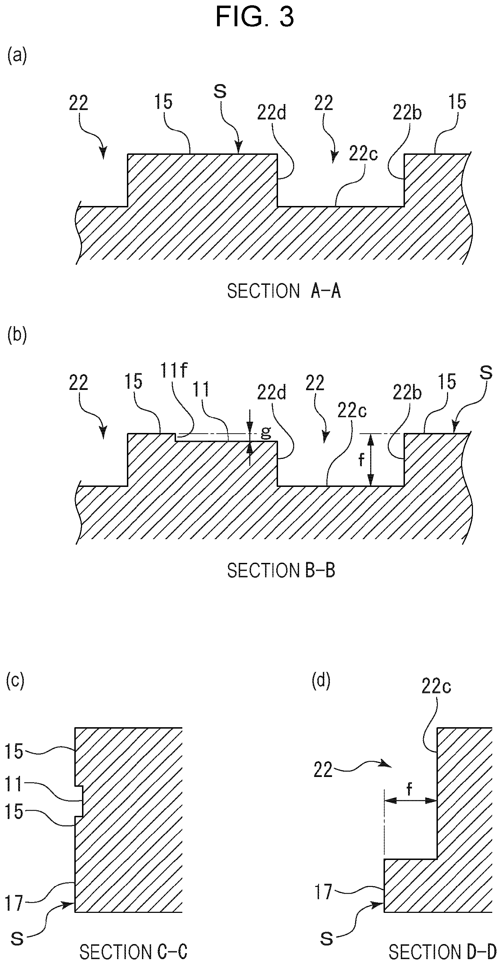

As shown in FIGS. 2, 3, plural fluid introduction portions 22 and plural extremely shallow grooves 11 serving as Rayleigh step mechanisms that communicate with the fluid introduction portions 22 are arranged on the sliding face S of the stationary side seal ring 5. Land portions 15 are provided between the fluid introduction portions 22 adjacent to each other, and the fluid introduction portions 22 and the extremely shallow grooves 11 are isolated from each other by the land portions 15. A land portion 17 formed in an annular shape to face the leakage side of the sliding face S is further provided, and the extremely shallow grooves 11 and the fluid introduction portions 22 are respectively isolated from the low pressure fluid side by the land portion 17.

Each of the fluid introduction portions 22 is a bottomed recess portion having a sliding face opening portion 22e on the sliding face S and being recessed with respect to the sliding face S. Only a portion of the fluid introduction portion on the sealed side fluid side is open by a sealed fluid side opening portion 22a, and isolated from the low pressure fluid side by the land portions 15, 17. Specifically, the fluid introduction portion is a recess portion defined by the sealed fluid side opening portion 22a (opening portion according to the present invention) provided at a circumferential interval Y on a peripheral surface 5a on the sealed side fluid side of the sliding face, the sealed fluid side opening portion having opening width X in the circumferential direction, a bottom portion wall 22c extending in the radial direction from the sealed fluid side opening portion 22a and being provided at a position recessed with respect to the sliding face S by predetermined size f, a pair of side portion walls 22b, 22d standing on the bottom portion wall 22c while sandwiching the bottom portion wall 22c in the circumferential direction, and a peripheral wall 22f standing on the bottom portion wall 22c and the pair of side portion walls 22b, 22d on the opposite side of the sealed fluid side opening portion 22a. The peripheral wall 22f and the pair of side portion walls 22b, 22d are formed substantially vertically with respect to the bottom portion wall 22c, and an area of the sliding face opening portion 22e is substantially equal to an area of the bottom portion wall 22c. The plural (eight in FIG. 2) fluid introduction portions 22 are formed in the circumferential direction on the sliding face S. The number of the fluid introduction portions 22 is not limited to eight but can be not more than eight or not less than eight according to conditions.

In order to reduce flow resistance of the sealed fluid passing through the inside of the fluid introduction portion 22 from the sealed fluid side opening portion 22a and reaching the sliding face opening portion 22e, the circumferential width X of the sealed fluid side opening portion 22a is formed to be large. That is, on the peripheral surface 5a on the sealed side fluid side of the sliding face S, the circumferential width X of the sealed fluid side opening portion 22a of the fluid introduction portion 22 is formed to be larger than radial width Z of the fluid introduction portion 22. A ratio between the circumferential width X of the sealed fluid side opening portion 22a and the circumferential interval Y is set to be 0.2 ≤ X/Y ≤ 0.9. The circumferential interval Y is a circumferential interval at which the fluid introduction portion 22 is provided on the peripheral surface 5a on the sealed side fluid side of the sliding face S. The circumferential width X is circumferential width of the sealed fluid side opening portion 22a on the peripheral surface 5a on the sealed side fluid side of the sliding face S. The radial width Z is radial width of the fluid introduction portion 22, that is, Z = (d2 - d1)/2. The reference sign d2 denotes an outer diameter of the sliding face S (diameter of an outer peripheral portion of the fluid introduction portion 22) and the reference sign d1 denotes an inner diameter of the fluid introduction portion 22 (diameter of an inner peripheral portion of the fluid introduction portion 22).

Each of the extremely shallow grooves 11 forming the Rayleigh step mechanisms is a circumferential groove recessed from the sliding face S by g, and only a portion on the fluid introduction portion 22 side is open and communicates with the fluid introduction portion 22. The other peripheral portions are surrounded by the land portions 15, 17 and isolated from the low pressure fluid side. The depth g of the extremely shallow groove 11 is formed to be sufficiently shallower than the depth f of the fluid introduction portion 22. When the rotating side seal ring 3 is rotated, the fluid interposed between the sliding faces of the rotating side seal ring 3 and the stationary side seal ring 5 is pulled into the extremely shallow groove 11 from the fluid introduction portion 22 by viscosity thereof. By a level difference by a wall portion 11f on the downstream side of the extremely shallow groove 11, a gap between the rotating side seal ring 3 and the stationary side seal ring 5 is abruptly reduced and dynamic pressure (positive pressure) is generated. By this positive pressure, a gap between the two sliding faces that slide with respect to each other is increased, and the fluid flows into the sliding face S, so that lubricating is performed.

Operations and effects of the mechanical seal having the above configuration will be described. The sealed fluid passes through the inside of the fluid introduction portion 22 from the sealed fluid side opening portion 22a of the fluid introduction portion 22 and cools the sliding face S of the rotating side seal ring 3 serving as the opposing sliding face from the entire surface of the sliding face opening portion 22e, and also supplies the sealed fluid to the gap between the rotating side seal ring 3 and the stationary side seal ring 5 and performs lubricating and cooling.

By forming the circumferential width X of the sealed fluid side opening portion 22a larger than the radial width Z of the fluid introduction portion 22, a sliding area of the sliding face S is decreased. Thus, it is possible to reduce a sliding loss. By forming the circumferential width X of the sealed fluid side opening portion 22a larger than the radial width Z of the fluid introduction portion 22, a bottleneck of a flow passage passing through the inside of the fluid introduction portion 22 from the sealed fluid side opening portion 22a and reaching the sliding face S is removed. Thus, flow resistance of the sealed fluid is reduced. Thereby, it is possible to stably supply the fluid to the gap between the rotating side seal ring 3 and the stationary side seal ring 5 with a low pressure loss in a state where the sliding loss is reduced. Thus, it is possible to efficiently cool the sliding face S. Further, by forming the circumferential width X of the fluid introduction portion 22 larger than the radial width Z, and further setting the ratio between the circumferential width X of the fluid introduction portion 22 and the circumferential interval Y to 0.2 ≤ X/Y ≤ 0.9, it is possible to increase the area of the sliding face opening portion 22e. The fluid on the sealed fluid side is brought into direct contact with the sliding face S through the entire surface of the sliding face opening portion 22e formed to be large, so that it is possible to cool the sliding face S.

The sliding components of the present invention having the above configuration have the following remarkable effects. By forming the circumferential width X of the sealed fluid side opening portion 22a larger than the radial width Z of the fluid introduction portion 22, the sliding area of the sliding face S is decreased, so that it is possible to reduce a sliding loss, and it is also possible to reduce the flow resistance of the fluid in the fluid introduction portion 22. Thereby, in a state where the sliding loss is reduced, it is possible to perform cooling by stably and efficiently supplying the fluid to the gap between the rotating side seal ring 3 and the stationary side seal ring 5. Thus, it is possible to lower the temperature to a large extent. It is possible to cool the sliding face S by bringing the fluid on the sealed fluid side into direct contact with a wide range of the sliding face S through the entire surface of the large sliding face opening portion 22e. Thereby, even when circumferential velocity in a sliding radius of the sliding face of the mechanical seal 1 exceeds 10 m/s and a temperature increase becomes remarkable, it is possible to stably perform cooling. In particular, even with the mechanical seal 1 in which the circumferential velocity exceeds 30 m/s where sufficient cooling is conventionally difficult, a specifically remarkable cooling ability is exerted, so that it is possible to lower the temperature to a large extent. Thus, it is possible to improve long-term reliability of the mechanical seal.

### Second Embodiment

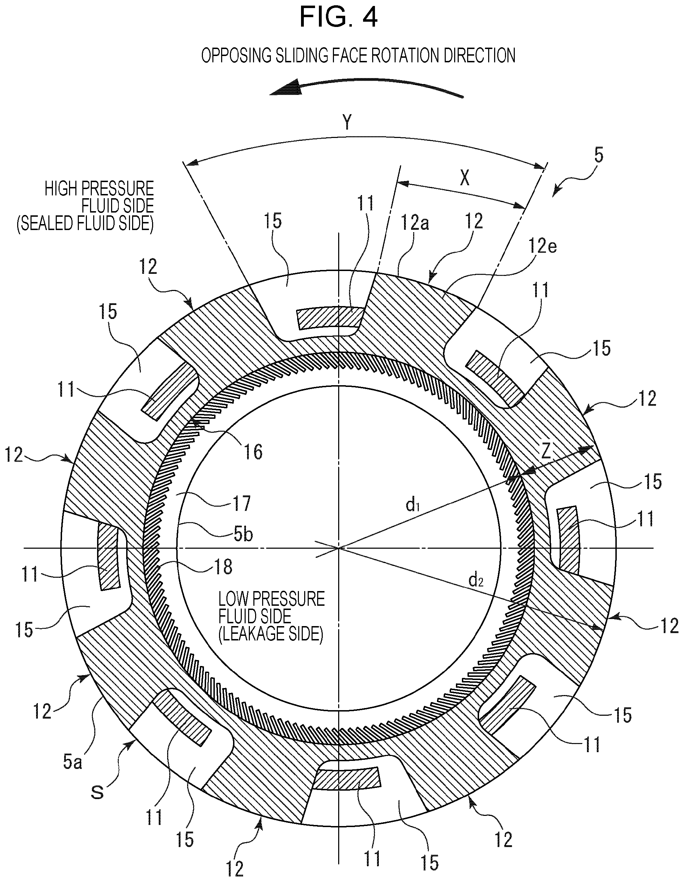

Next, sliding components according to a second embodiment will be described with reference to FIG. 4. The same members as the first embodiment will be given the same reference signs and duplicated description will be omitted.

As shown in FIG. 4, plural fluid introduction portions 12 and plural extremely shallow grooves 11 serving as Rayleigh step mechanisms that communicate with the fluid introduction portions 12 are arranged on a sliding face S of a stationary side seal ring 5, and an annular communication groove 16 providing communication between the fluid introduction portions 12, island-shaped land portions 15 surrounded by the fluid introduction portions 12 and the communication groove 16, a land portion 17 formed in an annular shape to face the leakage side of the sliding face S, and a pumping portion 18 formed between the communication groove 16 and the land portion 17 are mainly provided on the low pressure fluid side (leakage side) of the fluid introduction portions 12. The extremely shallow grooves 11, the fluid introduction portions 12, the communication groove 16, and the pumping portion 18 are isolated from the low pressure fluid side (leakage side) by the land portion 17. The sliding components of the second embodiment are different from the first embodiment in a point that the sliding face S includes the communication groove 16 and the pumping portion 18, and the other configurations are the substantially same as the first embodiment. Hereinafter, the communication groove 16 and the pumping portion 18 will be described.

The communication groove 16 provides communication between the fluid introduction portions 12 on the low pressure fluid side (leakage side) of the extremely shallow grooves 11 and the fluid introduction portions 12. Radial width of the communication groove 16 is sufficiently shallower than radial width and circumferential width of each of the fluid introduction portions 12. Depth of the communication groove 16 is formed to be sufficiently greater than depth of each of the extremely shallow grooves 11 and the substantially same as depth of the fluid introduction portion 12.

By relative movement of a rotating side seal ring 3 and the stationary side seal ring 5, pressure of a fluid in the extremely shallow groove 11 serving as a Rayleigh step is higher than the fluid introduction portion 12 (high pressure fluid side). This high pressure fluid flows into the sliding face S, and a fluid lubricating performance is improved. However, while the fluid lubricating performance is improved by high pressure generated by the extremely shallow groove 11, a flow going toward the leakage side from the extremely shallow groove 11, that is, leakage is also increased. By providing the communication groove 16 providing communication between the fluid introduction portions 12 over the entire circumference on the leakage side of the fluid introduction portion 12 and separating the extremely shallow groove 11 from the land portion 17 from the leakage side, the high pressure fluid from the extremely shallow groove 11 is released in the communication groove 16, so that it is possible to reduce leakage from the extremely shallow groove 11 toward the leakage side. The communication groove 16 is coupled in an annular shape in the present embodiment. However, as long as the high pressure fluid from the extremely shallow groove 11 can be released in the communication groove 16, the communication groove may be divided in the circumferential direction.

Further, on the sliding face S between the communication groove 16 and the land portion 17, the pumping portion 18 having an operation of pushing the fluid to leak from the land portion 17 to the leakage side back to the high pressure fluid side is provided over the entire circumference. By a pumping operation thereof, the pumping portion 18 suctions the fluid from the land portion 17 side and pushes the fluid back to the communication groove 16 side. Thus, by a synergy effect of the communication groove 16 and the pumping portion 18, it is possible to reduce leakage of the fluid from the land portion 17 to the leakage side. The pumping portion 18 is formed by, for example, providing plural spiral grooves formed to be extremely shallow at predetermined pitches in the circumferential direction. The pumping portion 18 is not limited to the spiral grooves but may be formed by dimples or minute periodical grooves.

As well as the first embodiment, in the sliding components of the second embodiment, by forming circumferential width X of a sealed fluid side opening portion 12a (opening portion according to the present invention) of the fluid introduction portion 12 larger than radial width Z of the fluid introduction portion 12, a sliding area of the sliding face S is decreased. Thus, it is possible to reduce a sliding loss. By forming the circumferential width X of the sealed fluid side opening portion 12a larger than the radial width Z of the fluid introduction portion 12, a bottleneck of a flow passage passing through the inside of the fluid introduction portion 12 from the sealed fluid side opening portion 12a and reaching the sliding face S is removed. Thus, flow resistance is reduced. Thereby, it is possible to stably supply the fluid to a gap between the rotating side seal ring 3 and the stationary side seal ring 5 with a low loss together with reduction in the sliding loss. Thus, it is possible to efficiently cool the gap between the rotating side seal ring 3 and the stationary side seal ring 5 and lower a temperature. By further setting a ratio between the circumferential width X of the fluid introduction portion 12 and circumferential interval Y to 0.2 ≤ X/Y ≤ 0.9, it is possible to increase an area of a sliding face opening portion 12e. By direct contact with the fluid on the sealed fluid side, it is possible to cool the rotating side seal ring 3 from the entire surface of the sliding face opening portion 12e.

With the sliding components of the second embodiment, the sliding area of the sliding face S is reduced and the sliding loss is reduced, and it is possible to perform cooling by stably supplying the fluid to the gap between the rotating side seal ring 3 and the stationary side seal ring 5 with a low loss. Thus, it is possible to lower the temperature of the sliding face S. By providing the communication groove 16 and the pumping portion 18 on the sliding face S, a sealing performance is improved. In particular, even with a mechanical seal 1 in which circumferential velocity in a sliding radius exceeds 30 m/s where cooling is conventionally difficult, a specifically remarkable cooling effect is exerted, so that it is possible to reduce a temperature of the mechanical seal 1 to a large extent. Thus, it is possible to ensure a sliding property and a sealing property of the mechanical seal and improve long-term reliability.

The embodiments of the present invention are described above with the drawings. Specific configurations are not limited to these embodiments but the present invention also includes changes and additions within the range not departing from the gist of the present invention.

In the first and second embodiments, the example in which the sliding component is used for at least any one of the pair of the rotating seal ring and the stationary seal ring in the mechanical seal device is described. However, the sliding component can also be utilized as a sliding component of a bearing to slide with a rotating shaft while sealing lubricating oil on the axially one side of a cylindrical sliding face.

In the first and second embodiments, the outer peripheral side of the sliding component is described as the high pressure fluid side (sealed fluid side), and the inner peripheral side as the low pressure fluid side (leakage side). However, the present invention is not limited to this but is also applicable to a case where the outer peripheral side of the sliding component is the low pressure fluid side (leakage side) and the inner peripheral side is the high pressure fluid side (sealed fluid side).

### REFERENCE SIGNS LIST

1 mechanical seal
2 sleeve
3 rotating side seal ring
4 housing
5 stationary side seal ring
6 coiled wave spring
7 bellows
9 rotating shaft
11 extremely shallow groove
12 fluid introduction portion
12a sealed fluid side opening portion (opening portion according to the present invention)
12e sliding face opening portion
15 land portion
16 communication groove
17 land portion
18 pumping portion
22 fluid introduction portion
22a sealed fluid side opening portion (opening portion according to the present invention)
22b side portion wall
22c bottom portion wall
22d side portion wall
22e sliding face opening portion
22f peripheral wall
P surface pressure
S sliding face
V circumferential velocity
X circumferential width of sealed fluid side opening portion of fluid introduction portion
Y circumferential interval between fluid introduction portions adjacent to each other on peripheral surface on sealed fluid side of sliding face
Z radial width of fluid introduction portion

## Claims

1. A pair of sliding components having sliding faces that slide with respect to each other, **characterized by** comprising:
fluid introduction portions having opening portions at a predetermined circumferential interval on a peripheral surface on the high pressure fluid side of the sliding face, the fluid introduction portions extending in the radial direction; and
extremely shallow grooves forming Rayleigh step mechanisms communicating with the fluid introduction portions and extending in the circumferential direction,
the sliding components being **characterized in that** circumferential width of the opening portions of the fluid introduction portions is larger than radial width of the fluid introduction portions.

2. The sliding components according to claim 1, **characterized in that** a ratio between the circumferential width of the opening portions of the fluid introduction portions and the circumferential interval is from 0.2 to 0.9.

3. The sliding components according to claim 1 or 2, **characterized in that** circumferential velocity in a sliding radius of the sliding face is not less than 10 m/s.

4. The sliding components according to any of claims 1 to 3, **characterized by** comprising:
a communication groove providing communication between the fluid introduction portions on the low pressure fluid side of the fluid introduction portions.

5. The sliding components according to claims 4, **characterized by** comprising:
a pumping portion on the sliding face on the low pressure fluid side of the communication groove.
